# EUROPÄISCHE PATENTSCHRIFT

(11) **EP 1 018 206 B1**
(45) Veröffentlichungstag und Bekanntmachung des Hinweises auf die Patenterteilung: **27.12.2006**
(21) Anmeldenummer: 99936500.0
(22) Anmeldetag: 08.07.1999
(51) Int. Cl.: H02K 21/12, H02K 1/12

(54) **STATORBAUEINHEIT FÜR EINE ELEKTRISCHE MASCHINE**
STATOR MODULE FOR AN ELECTRIC MOTOR
MODULE STATOR POUR UN MOTEUR ELECTRIQUE

(30) Priorität: 23.07.1998 DE 19833021; 23.07.1998 DE 29813023 U
(43) Veröffentlichungstag der Anmeldung: 12.07.2000
(73) Patentinhaber: Voith Turbo GmbH, 89522 Heidenheim (DE)
(72) Erfinder: MÜHLBERGER, Uwe, D-89522 Heidenheim (DE); ANGERER, Wolfram, D-89518 Heidenheim (DE); KOLL, Stefan, D-89522 Heidenheim (DE); LANGE, Andreas, D-89551 Zang (DE)
(74) Vertreter: Dr. Weitzel & Partner
(86) Internationale Anmeldenummer: PCT/EP1999/004807
(87) Internationale Veröffentlichungsnummer: WO 2000/005804

(56) Entgegenhaltungen:
- DE-A- 4 034 703
- DE-A- 4 314 513
- DE-A- 4 328 774
- DE-C- 3 821 660
- DE-C- 3 904 516
- GB-A- 2 231 207
- US-A- 5 051 641

## Beschreibung

Die Erfindung betrifft eine Statorbaueinheit für eine elektrische Maschine, insbesondere eine Wechselstrom maschine in Form einer Transversalflussmaschine.

Elektrische Maschinen in Form von Wechselstrommaschinen, insbesondere Transversalflussmaschinen, sind in verschiedenen Ausführungen aus einer Vielzahl von Druckschriften bekannt. Diesbezüglich wird auf die Druckschriften
1. DE 35 36 538 A1
2. DE 37 05 089 C1
3. DE 39 04 516 C1
4. DE 41 25 779 C1
verwiesen. Diese beschreiben im wesentlichen das Grundprinzip und den Aufbau nach dem Transversalflussprinzip arbeitender Wechselstrommaschinen. Die Maschinen umfassen wenigstens eine Statorbaueinheit mit einem Stator, vorzugsweise eine Vielzahl von Schnittbandkernen umfassend, mit mindestens einer Ankerwicklung und einen dieser gegenüberliegend angeordneten Rotor mit magnetischer Erregung. Die bekannten Statorbaueinheiten weisen dabei ein Statorgehäuse mit Stegen und mit sogenannten Fingern zur Fixierung und Wärmeableitung an den Schnittbandkernen des Außen- und Innenstators sowie einer Auflage zur Zentrierung der Ankerwicklung auf. Die äußeren Schnittbandkerne, d. h. die Schnittbandkerne des Außenstators, werden dabei zwischen den Stegen mittels Einstellschrauben und Halteklammern in radialer Richtung fixiert bzw. in anderen bekannten Ausführungen über einen Rückhaltering aus nicht leitendem Material grob radial fixiert. Die Schnittbandkerne des Innenstators werden zwischen den Fingern des Statorgehäuses in Umfangsrichtung und durch die Spule grob radial fixiert. Zur endgültigen Fixierung wird der so vormontierte Stator mit einer geeigneten Vergussmasse und unter Verwendung eines sogenannten Kernringes vergossen. Aufgrund der sehr komplizierten Gehäusestruktur ist der Verguss der Statoreinheit ein sehr umfangreicher Vorgang. Für die Erregerspulenherstellung sind sogenannte Wickel- und Tränkvorrichtungen erforderlich. Aufgrund der Vielzahl der Einzelteile und ihrer komplexen Gestaltung ist die Montage, insbesondere der Schnittbandkerne am Außenstator mit Befestigungsklammern, sehr aufwendig. In Analogie gilt diese Aussage auch für die im Innenstator enthaltenen Schnittbandkeme. Ein weiterer wesentlicher Nachteil bei der Fertigung der Statorbaueinheit besteht darin, dass die Erregerspule und die Schnittbandkerne im Statorgehäuse vergossen werden müssen und ein Nachbearbeiten der Vergussmasse in der Regel immer erforderlich sein wird. Die Vergussmasse wiederum beschränkt die zulässige Maximaltemperatur der gesamten Baueinheit während des Betriebes auf einen bestimmten Wert. Dies wirkt sich wiederum negativ auf die erzielbare zulässige Dauerleistung aus. Die Fertigung selbst verlangt aufwendig gestaltete Werkzeuge sowie hochqualifizierte Mitarbeiter zur Montage.

Die Druckschrift DE 39 04 516 C offenbart eine Statorbaueinheit für eine elektrische Maschine, insbesondere eine Transversalflussmaschine mit wenigstens einer, wenigstens einer Ankerwicklung tragende Statoreinheit, welche im Einbaulager einen Rotor unter Bildung eines bezogen auf die Symmetrieachse der elektrischen Maschine in radialer Richtung angeordneten Luftspaltes zugeordnet ist. Des weiteren umfasst die Statoreinheit wenigstens einen mit einer in Umfangsrichtung verlaufenden Umfangsfläche ausgebildetes und aus pulvermetallurgisch hergestelltem und verpressten Material gefertigtes Rückschlusselement. Dem Rückschlusselement sind zwei aus Zahnelementen bildbare Weicheiseneinheiten unter Bildung von im Bereich der Zahnelemente im Axialschnitt betrachtet im Wesentlichen U-förmigen Querschnittsflächen zugeordnet, wobei die Zahnelemente der einzelnen Weicheiseneinheiten die Schenkel in der Querschnittsfläche bilden.

Der Erfindung liegt daher die Aufgabe zugrunde, eine Statorbaueinheit der eingangs genannten Art für eine Wechselstrommaschine, insbesondere eine Transversalflussmaschine, derart weiterzuentwickeln, dass die genannten Nachteile vermieden werden. Im einzelnen soll die Statorbaueinheit eine einfache konstruktive Ausführung aufweisen, welche eine kostengünstige Fertigung und leichte Montage gewährleistet. Eine Verschlechterung der Eigenschaften bezüglich Wärmeabfuhr ist zu vermeiden.

Die erfindungsgemäße Lösung wird durch die Merkmale des Anspruchs 1 charakterisiert. Vorteilhafte Ausgestaltungen sind in den Unteransprüchen beschrieben.

Erfindungsgemäß ist vorgesehen, Statorbaueinheiten für elektrische Maschinen, insbesondere Transversalflußmaschinen, mit wenigstens einer, eine Ankerwicklung tragenden Statoreinheit, welche in radialer Richtung im Axialschnitt betrachtet einen Luftspalt mit einem Rotor in Einbaulage bildet, wenigstens aus einem in Einbaulage betrachtet in Umfangsrichtung sich ringförmig erstreckenden und vorzugsweise ringförmig ausgestalteten Rückschlußelement und mit diesem eine bauliche Einheit bildbaren Zahnelementen, aufweisend auszuführen. Das ringförmige Rückschlußelement wird dabei pulvermetallurgisch hergestellt bzw. aus einem pulvermetallurgisch hergestellten Bauteil gefertigt. Die Zahnelemente bestehen aus einem weichmagnetischen Material bzw. Werkstoff. Die Zahnelemente sind dabei derart mit dem ringförmigen Rückschlußelement koppelbar, daß diese in einem Axialschnitt der elektrischen Maschine betrachtet zusammen mit dem ringförmigen Rückschlußelement eine im wesentlichen U-förmig gestaltete Querschnittsfläche beschreiben, wobei die beiden Schenkel des U-förmigen Querschnittes jeweils von den Zahnelementen gebildet werden. Unter Zahnelement werden dabei sich in Einbaulage zum Rotor hin erstreckende Vorsprünge verstanden, die in Umfangsrichtung Flanken bzw. Flankenflächen bilden, wobei die beiden in Umfangsrichtung zueinander weisenden Flanken zweier in Umfangsrichtung einander benachbarter Zahnelemente Statorzahnlücken beschreiben.

Eine Vielzahl von Zahnelementen, welche im Axialschnitt betrachtet in axialer Richtung auf einem gemeinsamen Durchmesser, bezogen auf die Symmetrieachse der elektrischen Maschine, liegen bzw. welche sich bei Projezierung auf die Symmetrieachse durch einen gemeinsamen Punkt auf dieser beschreiben lassen, bilden eine sogenannte Weicheiseneinheit. Zur Realisierung eines U-förmigen Querschnittes erfolgt die Kopplung des Rückschlußelementes mit zwei Weicheiseneinheiten.
Vorzugsweise sind sternförmige Weicheisenelemente in Umfangsrichtung derart ausgeführt, daß diese eine Vielzahl von einzelnen, sich in Richtung des Rotors vom ringförmigen Rückschlußelement wegerstreckenden und die Zahnelemente beschreibende Vorsprünge aufweisen. Die Anordnung der die Zahnelemente beschreibenden Vorsprünge der Weicheiseneinheiten in Umfangsrichtung erfolgt entsprechend der Konfiguration des Rotors mit einem bestimmten Abstand zueinander. Vorzugsweise sind die die Zahnelemente bildenden Vorsprünge über einen gemeinsamen, sich in Umfangsrichtung erstreckenden Grundkörper, mit welchem diese vorzugsweise eine bauliche Einheit bilden, mit dem ringförmigen Rückschlußelement gekoppelt, insbesondere radial mit diesem verbunden.

Die Zahnelemente bzw. die aus diesen gebildeteten Weicheiseneinheiten, insbesondere jeweils zwei Zahnelemente, bilden in einem Axialschnitt betrachtet jeweils die sich vom ringförmigen Rückschlußelement wegerstreckenden Schenkel der Statoreinheit. Die Zahnelemente einer Weicheiseneinheit können dabei jeweils einzeln kraft- und/oder formschlüssig mit dem Rückschlußelement gekoppelt werden. Vorzugsweise sind jedoch die Weicheiseneinheiten jeweils als ringförmige Elemente ausgeführt bzw. die einzelnen Zahnelemente werden von einem gemeinsamen Grundkörper getragen. Zur Vermeidung von Kreisströmen sind die ringförmigen Elemente wenigstens an einer Stelle in Umfangsrichtung unterbrochen ausgeführt. Die Unterteilung in eine Mehrzahl von Segmenten, wobei jedes Segment eine Mehrzahl von Zahnelementen enthält, ist ebenfalls denkbar. Die Kopplung bzw. Verbindung der Weicheiseneinheiten mit dem ringförmigen Rückschlußelement kann unterschiedlich ausgeführt werden. Denkbar sind dabei Verbindungen mittels
a) Kraftschluß
b) Formschluß
c) Kraft- und Formschluß

Bei Ausführungen mit Kraftschluß werden vorzugsweise die Weicheiseneinheiten mit dem ringförmigen Rückschlußelement mittels einer Preßverbindung zusammengefügt. Dies bietet den Vorteil, daß aufgrund des Fehlens des reinen Stoffschlusses keine Abhängigkeit der Betriebsdauer von den verwendeten Verbundwerkstoffen vorliegt. Die konkrete Ausgestaltung der Preßverbindung kann unterschiedlich erfolgen. Die Auswahl liegt dabei im Ermessen des zuständigen Fachmannes.

Die grundlegende Möglichkeit der Ausgestaltung von Elementen von elektrischen Maschinen aus oder als pulvermetallurgisch gefertigte Teile ist bereits aus der Druckschrift "Composites pave the way to the electrical machine designs of the future" (Höganäs Iron Powder Information PM 95-4) bekannt. Diese betreffen jedoch die vollständige Ausführung von Elementen aus derartigen Materialien. Die Erfinder haben erkannt, daß die bloße Übertragung diese Möglichkeit auf die Transversalflußmaschine nicht die gewünschten Vorteile bietet und deshalb nach geeigneteren und verbesserten Ergebnisse leistenden Ausführungen geforscht.

Das sich ringförmig in Umfangsrichtung erstreckende Rückschlußelement kann in Umfangsrichtung betrachtet
a) einteilig oder
b) mehrteilig ausgeführt sein.
Bei Ausführung entsprechend Variante b) wird die ringförmige Kontur durch Befestigung der Teilelemente des Rückschlußelementes am Gehäuse in Umfangsrichtung fixiert.

Die die Wicklung tragende Statoreinheit aus Rückschlußelement und Weicheiseneinheiten bzw. Zahnelementen kann als kompakte und bereits vormontierte Grundbaueinheit angeboten und in die Statorbaueinheit, insbesondere das Statorgehäuse, integriert werden. Die Anzahl der gegeneinander in axialer und radialer Richtung zu fixierenden Bauelemente ist relativ gering und die Fixierung erfolgt bereits auf der Grundlage der Ausführung der Statorbaueinheit. Zwischen den Weicheiseneinheiten wird die Ankerwicklung angeordnet. Die gesamte Einheit inklusive der Ankerwicklung kann mit einem lsoliermittel, beispielsweise einem lsolierharz, getränkt werden. Der Teilbereich der Statoreinheit aus pulvermetallurgisch hergestelltem Material bietet den Vorteil isotroper, magnetischer und elektrischer Eigenschaften. Entsprechend der Statorkonstruktion ist dieser Bereich lediglich als Rückschlußbereich für den magnetischen Fluß zwischen den Weicheiseneinheiten bzw. den diese bildenden Zahnelementen erforderlich. Die aufgrund der Werkstoffeigenschaften bedingte schlechtere Permeabilität in diesem Bereich kann wegen des gegenüber den Zahnelementen vergrößerten Flußquerschnittes in Kauf genommen werden.

Die Verwendung des ringförmigen Rückschlußelementes in der beschriebenen Art und Weise bietet den Vorteil der Schaffung einer kompakten Statorkomponente mit verbesserter Festigkeit, leicht herstellbar ist und optimale elektrische und magnetische Eigenschaften aufweist.

In einer bevorzugten Ausführung sind die Weicheiseneinheiten bzw. die diese bildenden Zahnelemente als in axialer Richtung geschichtete Blechpakete, welche in Einbaulage betrachtet im Axialschnitt hintereinander aufgeschichtete ringförmige Elementen aus entsprechend gestanztem Blech umfassen. In Umfangsrichtung betrachtet weist jedes einzelne ringförmige Blechelement und damit jedes Blechpaket im Bereich der zum Rotor hin ausgerichteten Umfangsfläche randoffene Aussparungen zur Bildung der die Zahnelelemente beschreibenden Vorsprünge auf. Diese randoffenen Aussparungen sind über den Umfang jedes einzelnen ringförmig ausgestalteten Blechelementes und damit auch Belchpaketes in gleichmäßigen Abständen verteilt angeordnet. In Umfangsrichtung in Einbaulage betrachtet beschreiben die ringförmig gestalteten Blechelemente und damit jedes Blechpaket eine im wesentlichen sternförmige Kontur. Die Anzahl der in Einbaulage in axialer Richtung hintereinander angeordneten bzw. aufgeschichteten ringförmigen Einzelblechelemente hängt von der Auslegung der gesamten elektrischen Maschine ab. Die Darstellung der Weicheisenelemente als Blechpakete gewährleistet eine gute Permeabilität im Zahnbereich und minimiert die auftretenden Wirbelstromverluste.

Vorzugsweise wird bei Transversalflußmaschinen, die die Ankerwicklung tragende Statoreinheit, insbesondere der Statorteil, vom Innenstator einer Transversalflußmaschine gebildet. Dies bietet den Vorteil, den Innenstator bzw. wenigstens die einer Polstruktur des Rotors zugeordnete Statoreinheit als komplett vormontierte Baugruppe aus ringförmigem Rückschlußelement und den die Weicheiseneinheiten bildenden Zahnelementen in das Statorgehäuse einzuschrauben. Bei symmetrisch aufgebauten Transversalflußmaschinen weist der Rotor in der Regel zwei sich jeweils von einer zentralen Trägerscheibe wegerstreckende Polstrukturen auf, die zu je einer elektrischen Phase gehören. Demgemäß sind auch jeder Polstruktur die entsprechenden Statoreinheiten zuzuordnen. Die Gesamtbaueinheit Stator umfaßt in diesem Fall wenigstens zwei erfindungsgemäß gestaltete Statoreinheiten, welche als Innenstator fungieren und beidseitig der Trägerscheibe dem Rotor, insbesondere den Polstrukturen, zugeordnet sind. Die Verbindung zwischen Statorgehäuse und Innenstator findet dabei im Bereich des ringförmigen Rückschlußelementes statt, da diese in diesem Bereich einfach ohne großen Aufwand realisiert werden kann. Denkbar sind jedoch auch Ausführungen von Transversalflußmaschinen mit zwei eine Ankerwicklung tragenden Statoreinheiten, die in radialer Richtung beidseitig einer Polstruktur zuordenbar sind und bei welchen der Außenstator ebenfalls als vormontierte Baueinheit in der beschriebenen Art und Weise vorgefertigt wird. Eine andere dritte Möglichkeit besteht darin, lediglich den Außenstator als die Ankerwicklung tragende Komponente auszuführen.

Bei symmetrisch aufgebauten Transversalflußmaschinen mit einem Rotor mit zwei Polstrukturen sind somit wenigstens
a) zwei erfindungsgemäß gestaltete Statoreinheiten als Gesamtbaueinheit Innenstator und/oder
b) zwei erfindungsgemäß gestaltete Statoreinheiten als Gesamtbaueinheit Außenstator
vorgesehen, welche in radialer Richtung mit dem Rotor jeweils einen Luftspalt bilden und im Statorgehäuse integriert bzw. an diesem befestigt sind.

Bei Ausführung einer Transversalflußmaschine mit wenigstens einer die Ankerwicklung tragenden Statoreinheit in Form des Innenstators wird vorzugsweise der Außenstator aus einer Vielzahl von einzelnen Statorelementen ausgeführt, welche als Vollprofilbauteile aus pulvermetallurgisch hergestellten und verpreßten Werkstoffen bestehen, welche mit einfachen Befestigungselementen direkt am Statorgehäuse befestigt werden können. Vorzugsweise erfolgt die Befestigung mittels Schraubelementen. Um möglichst einfach gestaltete und leicht montierbare Vollteile verwenden zu können, welche in unterschiedlich ausgelegten Maschinen standardmäßig verwendet werden können, weisen diese im Bereich ihrer Berührungsfläche mit der Innenfläche des Gehäuses 5 eine im wesentlichen eben ausgebildete Anschlagfläche aus. Dementsprechend ist vorzugsweise die in Einbaulage zum Rotor hingewandte Stimfläche des Gehäuses ebenfalls mit in axialer Richtung verlaufenden eben ausgeführten Anschlagflächen ausgeführt. Zur Führung der Verbindungselemente sind Durchgangsöffnungen am Gehäuse 5, welche mit einem Gewinde versehen werden können und Gewindegänge in den Statorelementen vorgesehen.

Die erfindungsgemäße Ausgestaltung einer die Ankerwicklung tragenden Statoreinheit bietet neben einer Reihe von Kosten- und Fertigungsvorteilen auch erhebliche Funktionsvorteile. Insbesondere kann durch die in Kombination mit der vereinfachten Gestaltung des Außenstators ausgeführte Konfiguration eines Innenstatorelernentes eine verbesserte Wärmeabfuhr ins wassergekühlte Statorgehäuse ermöglicht werden. Infolge der kraftschlüssigen Verbindung, welche eine Vermeidung der Verwendung von Vergußmasse zur radialen und axialen Fixierung der Statoreinheit ermöglicht, kann insbesondere die Ankerwicklung direkt, beispielsweise bei Kühlung durch mittels Rotorrotation erzeugten Ölnebels gekühlt werden. Des weiteren ist durch die Vermeidung von Vergußmasse eine Steigerung der zulässigen Dauerleistung um ca. 25 % zu erwarten, da die zulässige Maximaltemperatur während des Betriebes nicht mehr durch die Vergußmasse beschränkt ist.

Das Statorgehäuse selbst kann sehr einfach strukturiert aufgebaut werden, insbesondere Schlitze für eine Aufnahme von Schnittbandkernen sind nicht mehr erforderlich. Bei der Herstellung erforderliche Wickel- und Tränkvorrichtungen zur Ankerspulenherstellung entfallen sowie die Mittel zum Bandagieren derselben. Die bisher aufwendige Montage der Außenschnittbandkerne mit Befestigungsklammem reduziert sich auf einfaches Anschrauben aus weichmagnetischem Material bestehenden Pulverelemente. Die erfindungsgemäß gestaltete Statoreinheit - unabhängig davon ob als Außen- oder Innenstator ausgelegt - kann als vormontierte fertige Baueinheit geliefert werden. Ein früher erforderliches Vergießen der Ankerspule und der Schnittbandkerne im Stator kann entfallen, wodurch auch die erforderlichen anschließenden Nacharbeiten vermieden werden. Des weiteren bedarf es zur Fertigung der Einzelelemente und der Montage keiner komplizierten Werkzeuge sowie keines besonderen Know-hows der damit betrauten Mitarbeiter.

Die erfindungsgemäße Lösung wird nachfolgend anhand von Figuren erläutert. Darin ist im einzelnen folgendes dargestellt:
- Fig. 1: zeigt die Anwendung einer erfindungsgemäß ausgestalteten Statoreinheit in Form eines Innenstators bei einer Transversalflußmaschine;
- Fig. 2: verdeutlicht in vergrößerter Darstellung eine erfindungsgemäß gestaltete und vormontierte Statorbaueinheit gemäß Fig. 1;
- Fig. 3: verdeutlicht eine Ansicht A-A entsprechend Fig. 1.

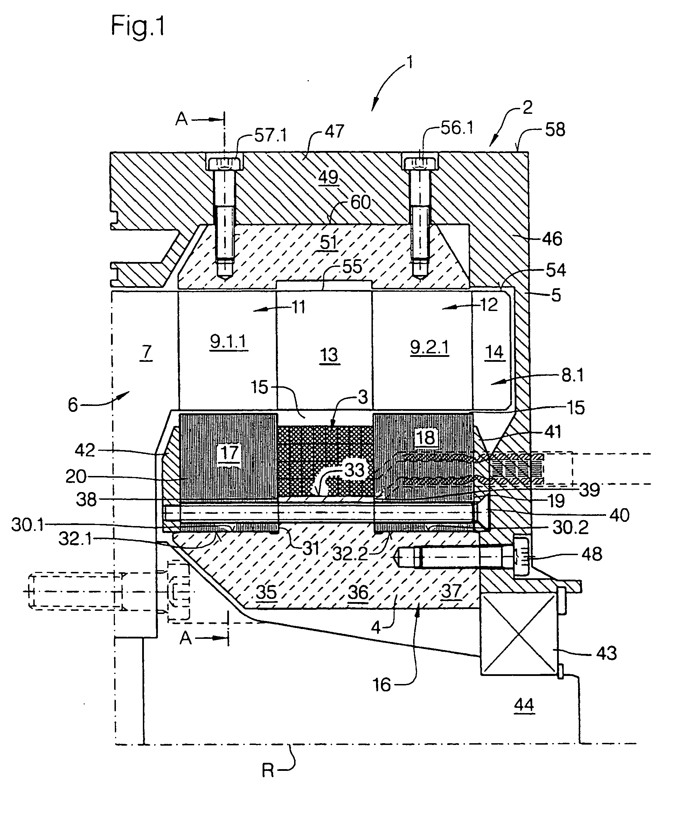

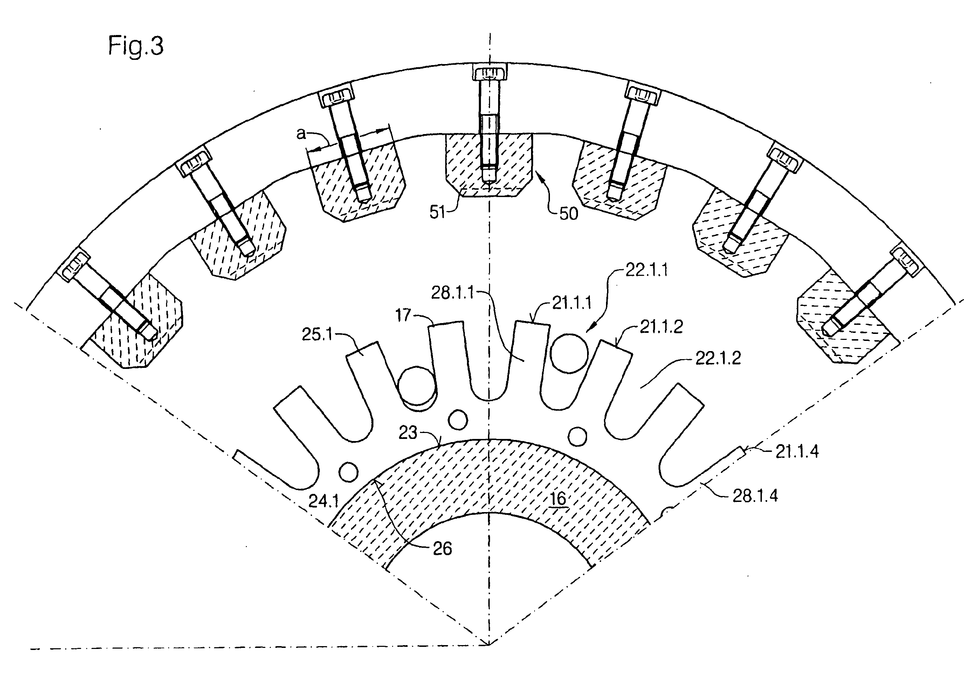

Die Fig. 1 verdeutlicht anhand eines Ausschnittes aus einem Axialschnitt einer elektrischen Maschine 1 in Form einer Transversalflußmaschine den Aufbau einer erfindungsgemäß gestalteten Statorbaueinheit 2. Die Statorbaueinheit 2 weist wenigstens eine, wenigstens eine Ankerwicklung 3 tragende Statoreinheit 4 auf. Die die Ankerwicklung 3 tragende Statoreinheit 4 ist hier als Element der Gesamtbaueinheit Innenstator ausgeführt. Die Statoreinheit 4 ist in einem Statorgehäuse 5 angeordnet. Im dargestellten Fall umfaßt die Statorbaueinheit 2 einen Innenstator aus zwei Statoreinheiten, wobei stellvertretend auszugsweise zur Verdeutlichung nur die einer Polstruktur des Rotors zugeordnete Statoreinheit dargestellt ist. In Gehäuse 5 ist ein Rotor 6 der elektrischen Maschine 1 drehbar gelagert. Der Rotor besteht in bekannter Weise aus einer zentralen Trägerscheibe 7, an deren radial äußerem Endbereich symmetrisch nach beiden Seiten koaxial zur Drehachse bzw. Rotationsachse R des Rotors 6, welche auch als Symmetrieachse der elektrischen Maschine fungiert, beispielsweise zwei Polstrukturen, die Polstruktur 8.1 und hier nicht dargestellt auf der einen Seite die Polstruktur 8.2 angeordnet sind. Diese Polstrukturen umfassen jeweils Permanentmagnete 9.1.1 - 9.1 n und 9.2.1 - 9.2n, die in zwei Reihen in Umfangsrichtung nebeneinander liegend jeweils wechselweise polarisiert und Rotorweicheisenelementen 10.1.1 - 10.1 n und 10.2.1 - 10.2n benachbart angeordnet sind. Die zwei Ringe sind hier mit 11 und 12 bezeichnet. Die Ringe aus den wechselweise in Umfangsrichtung hintereinander angeordneten Permanentmagneten 9 und den Rotorweicheisenelementen 10 sind durch ringförmige Zwischenelemente aus magnetisch und elektrisch nicht leitenden Material voneinander getrennt. Für die Polstruktur 8.1 ist dies wenigstens der Ring 13. Auch die Trägerscheibe und ein in axialer Richtung die Polstruktur begrenzendes Endstück 14 sind aus elektrisch und magnetisch nicht leitendem Material gefertigt. Vorzugsweise wird dafür Kunststoff verwendet. Der Polstruktur 8.1 steht getrennt durch einen Luftspalt 15 die Statoreinheit 4 gegenüber. Die Statoreinheit 4 bildet den radial innenliegenden Innenstator bzw. den der Polstruktur 8.1 zugeordneten Teil der Gesamtbaueinheit Innenstator. Die Statoreinheit 4 beschreibt in einer Ansicht im Axialschnitt der elektrischen Maschine gemäß Fig. 1 eine im wesentlichen U-förmig ausgebildete Querschnittsfläche. Die Statoreinheit 4 umfaßt zu diesem Zweck wenigstens ein ringförmiges Rückschlußelement 16, welches mit zwei aus einer Mehrzahl von Zahnelementen gebildeten Weicheiseneinheiten 17 und 18 eine bauliche Einheit bildet. Der Begriff Weicheiseneinheiten steht dabei für Elemente aus weichmagnetischen Werkstoffen. Die Weicheiseneinheiten 17 und 18 sind derart aufgebaut, daß diese im Querschnitt betrachtet im Axialschnitt gemäß Fig. 1 zwei Schenkel der Statoreinheit 4 bilden. Diese sind hier mit 19 und 20 bezeichnet. In Funktionslage stehen die Schenkel 19 und 20 den Permanentmagneten 9 der Polstruktur 8.1 des Rotors 6 gegenüber, im einzelnen der Schenkel 20 den Magneten 9.1.1 - 9.1 n und der Schenkel 19 den Magneten 9.2.1 - 9.2n. Innerhalb der Schenkel 19 und 20 befindet sich von drei Seiten umschlossen die in Umfangsrichtung verlaufende Ankerwicklung 3. Die Weicheiseneinheiten 17 und 18 sind in Umfangsrichtung wie in der Fig. 3 dargestellt derart ausgeführt, daß diese in Umfangsrichtung an der zum Luftspalt 15 bzw. dem Rotor 6 ausgerichteten Umfangsfläche 21.1 bzw. 21.2 in Teilflächenetemente 21.1.1 - 21.1 n bzw. 21.2.1 - 21.2n unterteilt sind, welche mit einer Teilung im bestimmten Verhältnis zur Polteilung T am Rotor voneinander in Umfangsrichtung beabstandet angeordnet sind. Zur Realisierung einer einfachen Montage sind die Weicheiseneinheiten 17 und 18 in Form von ringförmigen Elementen ausgeführt. Vorzugsweise werden die Weicheiseneinheiten 17 bzw. 18 als axial geschichtete Blechpakete ausgeführt. Jede Weicheiseneinheit einer Statoreinheit umfaßt dazu eine Mehrzahl von in axialer Richtung hintereinander angeordneten gestanzten ringförmigen Elementen aus Blechplatten. Die Beabstandung der Außenflächen 2.1.1 - 21.1 n und 21.2.1 - 21.2n mit einer bestimmten Teilung zueinander wird durch Ausführung bzw. Ausbildung randoffener Schlitze 22.1.1 bis 22.1 n und 22.2.1 bis 22.2n realisiert. Die randoffenen Schlitze 22.1.1 - 22.1n und 22.2.1 - 22.2n erstrecken sich dabei vom Bereich des Außenumfanges 21.1 bzw. 21.2 in radialer Richtung zur zum Rotor 6 hinweisenden Fläche des ringförmigen Elementes 16. Die randoffenen Schlitze sind des weiteren in axialer Richtung koaxial zur Rotationsachse R des Rotors ausgeführt. Die Öffnungen weisen immer zum Luftspalt bzw. Rotor 6 hin. Wenigstens das ringförmige Element 16 ist pulvermetallurgisch hergestellt. Als Grundmaterial wird dabei ein Metallpulver verwendet. Die Pulver werden dann verpreßt zu sogenannten Grünlingen. Diese werden entweder kalt oder unter erhöhter Temperatureinwirkung zur Erzielung bestimmter Eigenschaften verpreßt. Es kann eine Nachbehandlung erfolgen.

In Umfangsrichtung betrachtet weisen die aus jeweils einzelnen Zahnelementen gebildeten Weicheiseneinheiten 17 bzw. 18 in radialer Richtung wenigstens zwei Teilbereiche auf, einen ersten Teilbereich 24.1 bzw. 24.2 und einen zweiten Teilbereich 25.1 bzw. 25.2. Der erste Teilbereich 24.1 bzw. 24.2 ist zur Kopplung mit dem ringförmigen Rückschlußelement 16 vorgesehen und ebenfalls als ringförmiges Element ausgeführt. Die Kopplung mit dem ringförmigen Rückschlußelement 16 erfolgt dabei im Bereich der vom Rotor 6 in Einbaulage abgewandten Stirnseite 26 der Weicheiseneinheit 17 bzw. 27 der Weicheiseneinheit 18. Der zweite Teilbereich 25.1 bzw. 25.2 wird dabei aus einer Vielzahl von Einzelzahnelementen beschreibenden Vorsprüngen gebildet, welche mit 28.1.1 - 28.1 n für die Weicheiseneinheit 17 bezeichnet sind und die in Umfangsrichtung betrachtet vorzugsweise mit einer bestimmten Polteilung bezogen auf die Anordnung der Permanentmagneten am Rotor beabstandet sind. Die Einzelzahnelemente 28.1.1 - 28.1 n sind bei Ausführung der Weicheiseneinheiten aus gestanzten Blechelementen als bauliche Einheit mit dem ersten Teilbereich 24.1 ausgeführt. Die Einzelzahnemente 28.1.1 - 28.1 n bis 28.2.1 - 28.2n sind dann als Vorsprünge ausgebildet.

Für die Kopplung zwischen den Weicheiseneinheiten 17 bzw. 18 und dem Ringelement 16, welches im Funktionszustand als sogenannter Rückschlußring fungiert und mechanisch die Funktion eines Tragelementes ausführt, bestehen eine Vielzahl von Möglichkeiten. Vorzugsweise wird bei Ausführung der Weicheiseneinheiten 17 aus Weicheisenblechpaketen in geschlitzter Ausführung eine kraftschlüssige Kopplung zwischen dem ringförmigen Element 16 und den einzelnen Elementen der aus einer Mehrzahl von Zahnelementen gebildeten Weicheiseneinheit 17 vorgenommen. Dies kann im einfachsten Fall durch eine Preßverbindung erfolgen. In diesem Fall sind die einzelnen Elemente der Statoreinheit 4, ringförmiges Rückschlußelement 16 und die Weicheiseneinheiten 17 bzw. 18 derart hinsichtlich ihrer Abmessungen auszulegen, daß diese eine bestimmte Passung miteinander eingehen. Im einzelnen betrifft das wenigstens die miteinander in Wirkverbindung tretenden Flächenbereiche 30.1 bzw. 30.2, welche an der zum Rotor 6 ausgerichteten Stirnseite 31 des ringförmigen Elementes 16 ausgebildet sind und die mit diesem in Wirkverbindung tretenden Flächen 32.1 bzw. 32.2 an den Weicheiseneinheiten 17 bzw. 18, wobei die Flächen 32.1 und 32.2 jeweils von der in Einbaulage vom Rotor 6 weggerichteten Umfangsfläche 26 bzw. 27 ausgebildet werden.

Andere Möglichkeiten der Kopplung zwischen den Weicheiseneinheiten 17 bzw. 18 und dem ringförmigen Rückschlußelement 16 in radialer Richtung bestehen in formflüssigen Verbindungen bzw. in Kombinationsverbindungen mit Form- und Kraftschluß. Dazu ist es beispielsweise denkbar, die Weicheiseneinheiten 17 bzw. 18 mit entsprechenden Vorsprüngen zu versehen, welche in dazu komplementär ausgeführte Vorsprünge am ringförmigen Element eingeführt werden können und mit diesem beispielsweise mittels einer Schnappverbindung formschlüssig verbunden werden können. Im einzelnen sind eine Vielzahl von Ausführungsmöglichkeiten denkbar, auf welche jedoch hier im Einzelfall nicht eingegangen werden soll, da die Möglichkeit bei Kenntnis des erfindungsgemäßen Grundgedankens im Tätigkeitsbereich des zuständigen Fachmanns liegt.

Die Ankerwicklung 3, welche zwischen den beiden von den Weicheiseneinheiten 17 bzw. 18 gebildeten Schenkeln 20 bzw. 19 angeordnet ist, wird direkt auf den von den Teilflächen 30.1 und 30.2 freien Bereich der Stirnseite 31 des ringförmigen Elementes 16 aufgewickelt. Durch die in Umfangsrichtung als Baueinheit ausgeführte Ausführung der Weicheiseneinheit 17 bzw. 18 wird die Ankerwicklung 3 in axialer Richtung fixiert. Die Fixierung in radialer Richtung ergibt sich bei Ausführung des Innenstators als wicklungstragende Statoreinheit durch die beim Wickeln erzeugte Straffheit. Die Ankerwicklung 3 liegt dabei direkt auf der Teilfläche 33 der zum Rotor hin ausgerichteten Stirnseite 31 des ringförmigen Rückschlußelementes 16 auf. Zur genauen Fixierung der Lage der Weicheisenelemente in axialer Richtung beim Einbau ist das ringförmige Rückschlußelement vorzugsweise in drei Teilabschnitte untergliedert, einen ersten Teilabschnitt 35, einen zweiten Teilabschnitt 36 und einen dritten Teilabschnitt 37. Der Teilabschnitt 36 bildet dabei jeweils mit den Teilabschnitten 35 und den Teilabschnitten 37 in axialer Richtung einen Anschlag 38 für die Weicheiseneinheit 17 und einen Anschlag 39 für die Weicheiseneinheit 18. Das Teilelement 35 trägt dabei die Teilfläche 30.1, das Teilelement 37 die Teilfläche 30.2, während das Teilelement 36 die Teilfläche 33 trägt. Im einfachsten Fall werden die einzelnen Teilflächen 30.1, 30.2 bzw. 33 und damit die Teilelemente 35, 37 bzw. 36 durch Ausbildung des ringförmigen Elementes mit unterschiedlichem Außendurchmesser gebildet.

Die Ausführung des Innenstators im Querschnitt entsprechend Fig. 1 betrachtet unterscheidet sich somit in keiner Weise von der aus dem Stand der Technik bereits bekannten Statorform in dieser Ansicht. Die magnetische Flußführung ist ebenfalls dieselbe.

Die Innenstatorbaueinheit 4, welche aus dem ringförmigen Element 16, den Weicheiseneinheiten 17 bzw. 18 und der Ankerwicklung besteht, kann als komplett vormontierte Baueinheit bereitgestellt werden. Vorzugsweise sind zusätzliche Verbindungselemente zum Verspannen der Statorbaueinheit 4 in axialer Richtung vorgesehen. In diesem Fall ist stellvertretend ein Verbindungselement 40, welches ein erstes Anschlagselement 41, das der Weicheiseneinheit 18 in axialer Richtung zugeordnet ist und dessen Bewegbarkeit in axialer Richtung begrenzt, mit einem zweiten Anschlagelement 42, welches der anderen Weicheiseneinheit 17 zugeordnet ist, form- und kraftschlüssig miteinander koppelt bzw. verbindet. Das Verbindungselement 40 erstreckt sich dabei durch die Weicheiseneinheiten 18 und 17 sowie zum Teil das ringförmige Rückschlußelement 16, insbesondere im Bereich des zweiten Teilelementes 36. Die axiale Verspannung erfolgt mit der dem Moment am Innenstator bzw. der Statoreinheit 4 erforderlichen Vorspannung.

Die Figuren 1 bis 3 verdeutlichen die erfindungsgemäße Ausführung der wicklungstragenden Statoreinheit am Beispiel eines Ausschnittes aus einem Innenstator einer Transversalflußmaschine. Diese Ausführung stellt eine bevorzugte Anwendung des erfindungsgemäßen Grundgedankens dar, soll jedoch nicht auf die Ausführung als Innenstator begrenzt sein. Denkbar ist gleichfalls die Ausführung entsprechend des erfindungsgemäßen Grundgedankens für den Außenstator. Vorzugsweise wird die oben beschriebene Lösung jedoch nur für den Innenstator angewandt, da die Ausführung als Außenstator in Umfangsrichtung größere Pollücken aufweist und weiche wiederum erhöhte Verluste bedingen, die sich in einer Verringerung des Gesamtwirkungsgrades der elektrischen Maschine 1 niederschlagen.

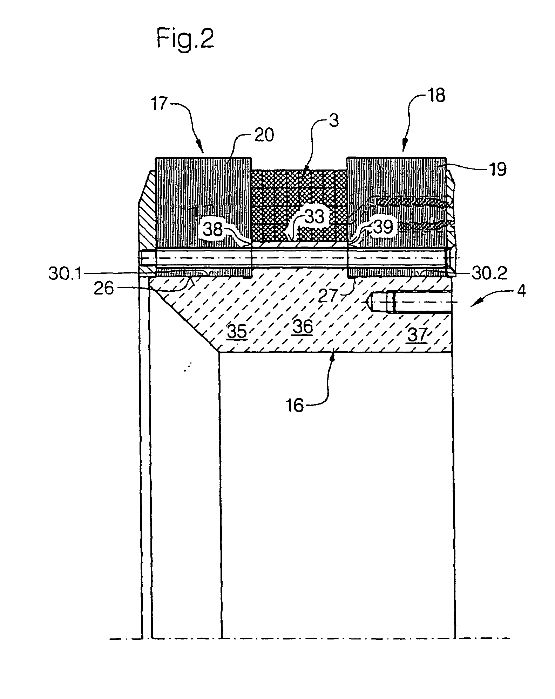

Die in den Figuren 1 und 2 dargestellte Statoreinheit 4, welche als Innenstator in Einbaulage fungiert, ist in dem Statorgehäuse 5 integriert. Das Statorgehäuse 5 ist dabei beispielsweise über eine Lageranordnung 43 auf der Rotorwelle 44 des Rotors 6 gelagert. Vorzugsweise weist das Statorgehäuse 5 eine in radialer Richtung verlaufende Stirnwand 46 und ein in axialer Richtung sich erstreckendes ringförmiges Gehäuseelement 47 auf, welche miteinander eine bauliche Einheit bilden. Denkbar sind jedoch auch Ausführungen des Statorgehäuses 5 in wenigstens zweiteiliger Ausführung, wobei die in radialer Richtung verlaufende Stirnwand 46 und das ringförmige Gehäuseelement 47 eine bauliche Einheit bilden und sich wenigstens in axialer Richtung in Einbaulage betrachtet über einen Bereich erstrecken, welcher sich durch die radiale Symmetrieachse S_{R} des Rotors 6 und des stirnseitigen Elements 14 beschreiben läßt.

Die Fig. 1 stellt eine besonders bevorzugte Ausführung für die Gestaltung des Statorgehäuses 5 dar. Das Statorgehäuse 5, bestehend aus der Stirnwand 46 und dem sich in axialer Richtung erstreckenden Gehäuseteil 47, ist als integrales Bauteil ausgeführt. Das ringförmige Element der Statoreinheit 4 ist mittels wenigstens eines Befestigungselementes 48 am Statorgehäuse 5, insbesondere der sich in radialer Richtung erstreckenden Stirnwand 46, befestigt. Vorzugsweise sind eine Vielzahl von Befestigungselementen 48 vorgesehen, welche auf einem Durchmesser d angeordnet sind und in Umfangsrichtung des Statorgehäuses 5 betrachtet vorzugsweise in gleichen Abständen zueinander angeordnet werden. Der Einbau der Statoreinheit 4 erfolgt als vormontierte Baugruppe aus den Weicheiseneinheiten 17, 18 und dem ringförmigen Rückschlußelement 16, welches pulvermetallurgisch gefertigt ist.

Die Fig. 2 verdeutlicht anhand eines Ausschnittes aus der Fig. 1 in vergrößerter Darstellung nochmals den Innenstator im Form der Statoreinheit 4. Für gleiche Elemente werden daher die gleichen Bezugszeichen verwendet. Im einzelnen gibt die Fig. 2 die vormontierte Statoreinheit 4, wie sie zum Einbau in das Statorgehäuse 5 verwendet werden kann, wieder.

Der Innenstator selbst bzw. die Statoreinheit 4 kann nach Aufwickeln der Ankerspule 3 mit einem lsolierharz getränkt und nach Trocknung in das Statorgehäuse 5 eingeschraubt werden.

Die Statorbaueinheit 1 umfaßt in der Regel des weiteren wenigstens eine zweite Statoreinheit 50, weiche als Außenstator fungiert. Die Statoreinheit 50 umfaßt dazu eine Vielzahl von in Umfangsrichtung hintereinander angeordneten Statoreinzelelementen 51, welche im Axialschnitt gemäß Fig. 1 ebenfalls einen im wesentlichen U-förmigen Querschnitt aufweisen. Die Statorelemente 51 bilden mit der Außenfläche 54 des Rotors 6 in Einbaulage bzw. im montierten Zustand der elektrischen Maschine 1 einen Luftspalt 55. Die Statoreinheit 50 ist vorzugsweise frei von einer Ankerwicklung.

In Umfangsrichtung in Einbaulage betrachtet weist jedes Statoreinzelelement eine bestimmte Erstreckung a auf. Das Statoreinzelelement 51 ist als Element mit verbreitertem Rücken ausgeführt, welches vorzugsweise pulvermetallurgisch hergestellt und verpreßt einstückig gefertigt ist. Die einzelnen Statorelemente 51, welche als Vollteil ausgeführt sind, werden vorzugsweise nur noch kraft- und formschlüssig mittels Verbindungselementen 56.1 bis 56.N bzw. 57.1 bis 57.N miteinander verbunden. Vorzugsweise erfolgt diese Verbindung mittels Schraubverbindungen. Die Schraubverbindungen werden von der Außenfläche 58 des ringförmigen Gehäuseteiles 47 durch die Gehäusewand 49 des ringförmigen Gehäuseteiles 47 hindurch geführt und mit entsprechenden Gegenelementen in den Statoreinzelelementen 51 in Wirkverbindung gebracht. Vorzugsweise weist dazu jedes Statoreinzelelement 51 wenigstens ein in dieses eingearbeitetes Gewinde auf. Der Gewindegang erstreckt sich dabei von der vom Rotor weggerichteten Außenfläche in Richtung des Rotors 6. Andere einfach zu realisierende Verbindungen sind ebenfalls denkbar.

Vorzugsweise sind sowohl die Statoreinzelelemente 51 der Statoreinheit 50 und das ringförmige Rückschlußelement 16 der Statoreinheit 4 aus dem gleichen Werkstoff hergestellt. Dazu wird vorzugsweise ein Eisenpulververbundwerkstoff verwendet. Die pulvermetallurgisch hergestellten Elemente sind hinsichtlich der elektrischen und magnetischen Eigenschaften richtungsunabhängig. Zwar weisen diese gegenüber den üblicherweise verwendeten Komponenten aus Elektroblech eine geringere Permeabilität auf, allerdings äußert sich dies bei der in der Fig. 1 bevorzugt ausgeführten Statorkonstruktion nicht negativ. Der magnetische Fluß wird nach wie vor transversal geführt.

Das ringförmig ausgeführte Rückschlußelement weist wenigstens eine in Umfangsrichtung verlaufende Außenfläche auf. Die Innenkontur ist nicht an die ringförmige Gestaltung gebunden und kann vielgestaltig ausgeführt sein. Denkbar ist auch die Unterteilung des Rückschlußelementes in Umfangsrichtung in wenigstens zwei Teilelemente, welche in Einbaulage zusammengesteckt werden bzw. durch die Befestigung am Statorgehäuse das in Umfangsrichtung ringförmige Element beschreiben, wobei in Umfangsrichtung wenigstens eine Unterbrechung vorgesehen werden kann.

Die erfindungsgemäße Ausführung weist in ihrer Gesamtheit erhebliche Kosten-, Fertigungs- und Funktionsvorteile auf. Da das Statorgehäuse selbst ohne Schlitze für die im Stand der Technik bekannten Schnittbandkerne ausgeführt werden muß, kann dieses sehr einfach, beispielsweise als Gußteil, hergestellt werden. Zusätzliche Wickel- und Tränkvorrichtungen für die Spulenherstellung entfallen sowie auch ein Bandagieren derselbigen. Des weiteren gestaltet sich die Montage der Statorelemente am Außenstator wesentlich einfacher, da die aufwendige Montage der Außenschnittbandkerne mit Befestigungsklammern entfallen kann. Mit den Innenschnittbandkernen verhält es sich ebenso. Lediglich wird der Innenstator mit der Ankerspule als komplette Einheit nur noch eingeschraubt. Auch ein Vergießen der Spule und der Schnittbandkerne im Stator kann entfallen, ebenso wie das anschließende Evakuieren und Nachbearbeiten sowie Tempern der Vergußmasse.

Neben der möglichen besseren Wärmeabfuhr in ein wassergekühltes Statorgehäuse kann durch den Wegfall der Vergußmasse vor allem die Ankerspule durch den Ölnebel intensiver gekühlt werden. Durch den Wegfall der Vergußmasse, welche bisher auch die zulässige Belastbarkeit hinsichtlich der Temperatur auf einen Wert von ca. 130° C beschränkte, kann jetzt die zulässige Grenze um ca. 20° C höher angesetzt werden, so daß die erreichbare Dauerleistung allein durch den Wegfall der Vergußmasse bedingt, um ca. 25 % ansteigt. Durch den Wegfall der nicht mehr erforderlichen Einrichtungen zur Fixierung der Schnittbandkerne bzw. Sammlerelemente entfallen bei der Herstellung der Gußform aufwendige Kerne. Des weiteren ist auch kein Entgraden der Aluminium-Finger im Bereich der Spulenanlage und -auflage mehr erforderlich. Zur Herstellung des Stators in der in der Fig. 1 beschriebenen Ausführung genügt ein einfacher Montageplatz und es ist keinerlei spezielles Know How von Seiten des Monteurs mehr erforderlich.

## Patentansprüche

1. Statorbaueinheit (2) für eine elektrische Maschine, insbesondere eine Transversalflußmaschine
mit wenigstens einer, wenigstens einer Ankerwicklung (3) tragenden Statoreinheit (4), welche in Einbaulage einem Rotor (6) unter Bildung eines, bezogen auf die Symmetrieachse der elektrischen Maschine (1), in radialer Richtung angeordneten Luftspaltes (15, 55) zugeordnet ist;
die Statoreinheit (4) umfaßt wenigstens ein, mit einer in Umfangsrichtung verlaufenden Umfangsfläche (30.1, 30.2, 33) ausgebildetes und aus puivermetallurgisch hergestelltem und verpreßten Material gefertigtes Rückschlußelement (16);
dem Rückschlußelement (16) sind zwei aus Zahnelementen (28.1.1, - 28.1.n; 28.2.1 - 28.2.n) bildbare Weicheiseneinheiten (17, 18) unter Bildung von im Bereich der Zahnelemente (28.1.1 - 28.1.n; 28.2.1 - 28.2.n) im Axialschnitt betrachtet im wesentlichen U-förmigen Querschnittsflächen zugeordnet, wobei die Zahnelemente der einzelnen Weicheiseneinheiten (17, 18) die Schenkel (19, 20) der Querschnittsflächen bilden;
die Lage der Ankerwicklung (3) ist durch die zum Rotor (6) hinweisende Umfangsfläche (30.1, 30.2, 33) des Rückschlußelementes (16) sowie die zueinander weisenden Stirnseiten der Weicheiseneinheiten (17, 18) begrenzt; **gekennzeichnet durch** die folgenden Merkmale:
das Rückschlußelement (16) umfaßt wenigstens drei Teilabschnitte (35, 36, 37) - einen ersten Teilabschnitt (35), einen zweiten Teilabschnitt (36) und einen dritten Teilabschnitt (37);
die beiden Weicheiseneinheiten (17, 18) sind jeweils dem ersten (35) und dem dritten (37) Teilabschnitt und die Ankerwicklung (3) dem zweiten Teilabschnitt (36) zugeordnet;
wenigstens der zweite Abschnitt (36) weist gegenüber dem ersten (35) und dritten (37) Abschnitt einen unterschiedlichen Außendurchmesser unter Bildung wenigstens einer Anschlagfläche (38, 39) in axialer Richtung für jede Weicheiseneinheit (17, 18) auf;
jeder Weicheiseneinheit (17, 18) ist des weiteren eine Endscheibe (41, 42) zur Begrenzung der Bewegbarkeit in axialer Richtung zugeordnet; mit Mitteln (40) zur Erzeugung einer Verspannung der Elemente der Weicheiseneinheit (17, 18), Rückschtußetement (16) und Endscheibe (41, 42) in axialer Richtung.

2. Statorbaueinheit nach Anspruch 1, **dadurch gekennzeichnet, daß** jede Weicheiseneinheit (17, 18) als ringförmiges Element in Umfangsrichtung in bestimmten vordefinierten Abständen randoffene Aussparungen (22.1.1 - 22.1.n; 22.2.1 - 22.2.n) an den vom ringförmigen Umfang (30.1, 30.2, 33) des Rückschlußelementes (16) weg erstreckenden Flächen (21.1, 21.2) unter Bildung der Zahnelemente (21.1.1 - 21.1.n; 21.2.1 - 21.2.n) aufweist.

3. Statorbaueinheit nach einem der Ansprüche 1 oder 2, **dadurch gekennzeichnet, daß** das Rückschlußelement (16) und die Weicheiseneinheiten (17, 18) formschlüssig miteinander gekoppelt sind.

4. Statorbaueinheit nach einem der Ansprüche 1 bis 3, **dadurch gekennzeichnet, daß** das Rückschlußelement (16) und die Weicheiseneinheiten (17, 18) kraftschlüssig miteinander gekoppelt sind,

5. Statorbaueinheit nach Anspruch 4, **dadurch gekennzeichnet, daß** die kraftschlüssige Kopplung über eine Preßverbindung realisiert wird.

6. Statorbaueinheit nach einem der Ansprüche 1 bis 5, **dadurch gekennzeichnet, daß** jede Weicheiseneinheit (17, 18) eine Vielzahl von einzelnen Blechelementen umfaßt, welche im Axialschnitt in Einbaulage betrachtet hintereinander geschichtet unter Bildung eines Blechpaketes angeordnet sind.

7. Statorbaueinheit nach Anspruch 6, **gekennzeichnet durch** die folgenden Merkmale:
jedes Blechpaket ist ringförmig ausgebildet;
jedes Blechpaket weist einen in Umfangsrichtung verlaufenden Grundkörper mit **durch** randoffene Aussparungen (22.1.1 - 22.1.n; 22.2.1 - 22.2.n) im Bereich der in Einbaulage zum Rotor (6) hinweisenden Umfangsfläche (21.1, 21.2) ausgebildeten Vorsprüngen (28.1.1 - 28.1.n; 28.2.1 - 28.2.n) auf;
die randoffenen Aussparungen (22.1.1 - 22.1.n; 22.2.1 - 22.2.n) bzw. die Vorsprünge (28.1.1 - 28.1.n; 28.2.1 - 28.2.n) sind in Umfangsrichtung betrachtet in bestimmten gleichmäßigen Abständen zueinander angeordnet.

8. Statorbaueinheit nach einem der Ansprüche 1 bis 7, **dadurch gekennzeichnet, daß** das Rückschlußelement (16) mehrteilig ausgeführt ist.

9. Statorbaueinheit nach einem der Ansprüche 1 bis 8, **dadurch gekennzeichnet, daß** die Statoreinheit (4) ein Element des Innenstators der elektrischen Maschine (1) bildet.

10. Statorbaueinheit nach einem der Ansprüche 1 bis 9, **dadurch gekennzeichnet, daß** die Statoreinheit (4) ein Element des Außenstators der elektrischen Maschine (1) bildet.

11. Statorbaueinheit (2) nach einem der Ansprüche 1 bis 10, **gekennzeichnet durch** die folgenden Merkmale:
mit einem Statorgehäuse (5) ;
die Statoreinheit (4) ist im Bereich des Rückschlußelementes (16) mit dem Statorgehäuse (5) verbindbar.

12. Statorbaueinheit nach Anspruch 11, **gekennzeichnet durch** die folgenden Merkmale:
das Statorgehäuse (5) umfaßt wenigstens ein in Umfangsrichtung verlaufendes und den Rotor (6) oder den Außenstator (50) umschließendes Gehäuseteil (47), welches mit einem sich in radialer Richtung erstreckenden stirnseitigen Seitenteil (46) koppelbar ist.

13. Statorbaueinheit nach Anspruch 12, **dadurch gekennzeichnet**, daB das ringförmige Statorgehäuseteil (47) und das stimseitig angeordnete Gehäuseteil (46) eine bauliche Einheit bilden.

14. Statorbaueinheit nach einem der Ansprüche 1 bis 9 und 11 bis 13, **gekennzeichnet durch** die folgenden Merkmale:
die Statoreinheit (4) ist als Element des Innenstators ausgeführt;
der dem Rotor (6) unter Bildung eines Luftspaltes (55) in radialer Richtung zugeordnete Außenstator umfaßt in Umfangsrichtung eine Vielzahl von in bestimmten Abständen zueinander angeordneten im Querschnitt u-förmig gestalteten Vollelementen mit Zahnelementen (51), welche dem Rotor (6) in entsprechend komplementärer Weise wie die Statoreinheiten (4) zugeordnet sind;
die Einzelelemente (51) sind aus pulvermetallurgisch hergestellten und verpreßten Materialien gefertigt und mittels Befestigungselementen (56.1 - 56.n; 57.1 - 57.n) mit dem Statorgehäuse (5) verbunden.

15. Statorbaueinheit nach Anspruch 14, **dadurch gekennzeichnet, daß** die Verbindung zwischen den Einzelelementen (51) des Außenstators und dem Statorgehäuse (5) durch Schraubverbindungen realisiert wird.

16. Statorbaueinheit nach einem der Ansprüche 1 bis 15, **dadurch gekennzeichnet, daß** jeder Phase bzw. Polstruktur (8.1, 8.2) des Rotors (6) gleichgestaltete Statoreinheiten (4) zugeordnet werden.

17. Statorbaueinheit nach einem der Ansprüche 1 bis 16, **dadurch gekennzeichnet, daß** die Weicheiseneinheit (17, 18) in Umfangsrichtung unterteilt ausgeführt ist.

## Claims

1. A stator module (2) for an electric machine, especially a transversal flux machine, comprising at least one stator unit (4) which carries at least one armature winding (3) and which in the installed position is associated with a rotor (6) by forming an air gap (15, 55) arranged in the radial direction relating to the axis of symmetry of the electric machine (1); the stator unit (4) comprises at least one magnetic return element (16) which is formed in a circumferential surface (30.1, 30.2, 33) extending in the circumferential direction and is made and pressed by way of powder metallurgy; the magnetic return element (16) is associated with two soft-iron units (17, 18) which can be formed from tooth elements (28.1.1 - 28.1.n; 28.2.1 - 28.2.n) by forming substantially U-shaped cross sectional surfaces when seen in an axial sectional view in the region of the tooth elements (28.1.1 - 28.1.n; 28.2.1 - 28.2.n), with the tooth elements of the individual soft-iron units (17, 18) forming the legs (19, 20) of the cross-sectional surfaces; the position of the armature winding (3) is delimited by the circumferential surface (30.1, 30.2, 33) of the magnetic return element (16) facing towards the rotor (6) and the mutually facing face sides of the soft-iron units (17, 18), **characterized by** the following features:
the magnetic return element (16) comprises at least three partial sections (35, 36, 37), namely a first partial section (35), a second partial section (36) and third partial section (37);
the two soft-iron units (17, 18) are each associated with the first (35) and third (37) partial section and the armature winding (3) to the second partial section (36);
at least the second section (36) has a different outside diameter relative to the first (35) and third (37) section by forming at least one stop surface (38, 39) in the axial direction for each soft-iron unit (17, 18);
each soft-iron unit (17, 18) is further associated with a locking plate (41, 42) for delimiting the mobility in the axial direction;
with means (40) for producing a clamping of the elements of the soft-iron unit (17, 18), magnetic return unit (16) and locking plate (41, 42) in the axial direction.

2. A stator module according to claim 1, **characterized in that** each soft-iron unit (17, 18) as an annular element comprises recesses (22.1.1 to 22.1.n; 22.2.1 to 22.2.n) in the circumferential direction in certain predetermined intervals, which recesses are open on the edge and are provided on surfaces (21.1, 21.2) extending away from the annular circumference (30.1, 30.2, 33) of the magnetic return element (16) by forming the tooth elements (21.1.1 to 21.1.n; 21.2.1 to 21.2.n).

3. A stator module according to one of the claims 1 or 2, **characterized in that** the magnetic return element (16) and the soft-iron units (17, 18) are coupled with each other in a positive manner.

4. A stator module according to one of the claims 1 to 3, **characterized in that** the magnetic return unit (16) and the soft-iron units (17, 18) are coupled with each other in a non-positive manner.

5. A stator module according to claim 4, **characterized in that** the non-positive coupling is realized by way of a compression joint.

6. A stator module according to one of the claims 1 to 5, **characterized in that** each soft-iron unit (17, 18) comprises a plurality of individual sheet metal elements which are layered behind one another by forming a sheet stack when seen in an axial section in the installed position.

7. A stator module according to claim 6, **characterized by** the following features:
each sheet stack is provided with an annular configuration;
each sheet stack comprises a basic body extending in the circumferential direction with projections (28.1.1 to 28.1.n; 28.2.1 to 28.2.n) formed by recesses (22.1.1 to 22.1.n; 22.2.1 to 22.2.n) which are open on the edge in the area of the circumferential surface (21.1, 21.2) facing towards the rotor (6) in the installed position;
the recesses (22.1.1 to 22.1.n; 22.2.1 to 22.2.n) which are open on the edge or the projections (28.1.1 to 28.1.n; 28.2.1 to 28.2.n) are arranged in certain regular even intervals with respect to each other as seen in the circumferential direction.

8. A stator module according to one of the claims 1 to 7, **characterized in that** the magnetic return unit (16) is arranged with several parts.

9. A stator module according to one of the claims 1 to 8, **characterized in that** the stator unit (4) forms an element of the inside stator of the electric machine (1).

10. A stator module according to one of the claims 1 to 9, **characterized in that** the stator unit (4) forms an element of the outer stator of the electric machine (1).

11. A stator module (2) according to one of the claims 1 to 10, **characterized by** the following features:
with a stator housing (5);
the stator unit (4) can be joined with the stator housing (5) in the area of the magnetic return element (16).

12. A stator module according to claim 11, **characterized by** the following features:
the stator housing (5) comprises at least one housing part (47) which extends in the circumferential direction and encloses the rotor (6) or the outer stator (50) and which can be coupled with a lateral part (46) on the face side which extends in the radial direction.

13. A stator module according to claim 12, **characterized in that** the annular stator housing part (47) and the housing part (46) arranged on the face side form a modular unit.

14. A stator module according to one of the claims 1 to 9 and 11 to 13, **characterized by** the following features:
the stator unit (4) is arranged as an element of the inner stator;
the outer stator (6) associated with the rotor by forming an air gap (55) in the radial direction comprises in the circumferential direction a plurality of solid elements with tooth elements (51) which are arranged in certain distances from each other and are arranged in a U-shaped way in the cross section and which are associated with the rotor (6) in respectively complementary manner like the stator units (4);
the individual elements (51) are made of materials made and pressed by way of powder metallurgy and are joined to the stator housing (5) by means of fastening elements (56.1 to 56.n; 57.1 to 57.n).

15. A stator module according to claim 14, **characterized in that** the connection between the individual elements (51) of the outer stator and the stator housing (5) is realized by screwed connections.

16. A stator module according to one of the claims 1 to 15, **characterized in that** each phase or pole structure (8.1, 8.2) of the rotor (6) are associated with similarly arranged stator units (4).

17. A stator module according to one of the claims 1 to 16, **characterized in that** the soft-iron unit (17, 18) is provided with a configuration which is subdivided in the circumferential direction.

## Revendications

1. Unité de stator (2) pour un moteur électrique, en particulier un moteur à flux transversal,
avec au moins une unité de stator (4) portant au moins un enroulement d'induit (3), qui est associée dans la position de montage à un rotor (6) en formant un entrefer (15, 55) disposé dans le sens radial par rapport à l'axe de symétrie du moteur électrique (1) ;
l'unité de stator (4) comprend au moins un élément de retour magnétique (16) doté d'une surface de circonférence (30.1, 30.2, 33) orientée dans le sens de la circonférence et fabriqué en matériau produit par métallurgie des poudres et compressé ;
l'élément de retour magnétique (16) est associé à deux unités en fer doux (17, 18) pouvant être composées à l'aide d'éléments en forme de dents (28.1.1-28.1.n ; 28.2.1-28.2.n) en formant des surfaces de section sensiblement en forme de U en coupe axiale au niveau des éléments en forme de dents (28.1.1-28.1.n ; 28.2.1-28.2.n), les éléments en forme de dents des différentes unités en fer doux (17, 18) formant les bras (19, 20) des surfaces de section ;
la position de l'enroulement d'induit (3) est limitée par la surface de circonférence (30.1, 30.2, 33) de l'élément de retour magnétique (16) orientée vers le rotor (6) et par les faces d'extrémité orientées l'une vers l'autre des unités de fer doux (17, 18);
**caractérisée en ce que** :
l'élément de retour magnétique (16) comprend au moins trois segments (35, 36, 37), un premier segment (35), un deuxième segment (36) et un troisième segment (37) ;
les deux unités de fer doux (17, 18) sont associées l'une au premier segment (35) et l'autre au troisième (37) et l'enroulement d'induit (3) au deuxième segment (36) ;
le deuxième segment (36) au moins possède un diamètre extérieur différent du premier segment (35) et du troisième (37) et formant au moins une surface de butée (38, 39) dans le sens axial pour chaque unité en fer doux (17, 18) ;
chaque unité en fer doux (17, 18) est associée en outre à une plaque d'extrémité (41, 42) pour limiter la mobilité dans le sens axial, avec des moyens (40) pour produire un serrage des éléments de l'unité en fer doux (17, 18), de l'élément de retour magnétique (16) et de la plaque d'extrémité (41, 42) dans le sens axial.

2. Unité de stator selon la revendication 1, **caractérisée en ce que** chaque unité en fer doux (17, 18) conformée comme un élément annulaire présente dans le sens de la circonférence, à des intervalles prédéfinis, des évidements ouverts sur le bord (22.1.1-22.1.n ; 22.2.1-22.2.n) sur les surfaces (21.1, 21.2) qui s'écartent de la circonférence annulaire (30.1, 30.2, 33) de l'élément de retour magnétique (16) en formant les éléments en forme de dents (21.1.1-21.1.n ; 21.2.1-21.2.n).

3. Unité de stator selon l'une des revendications 1 ou 2, **caractérisée en ce que** l'élément de retour magnétique (16) et les unités de fer doux (17, 18) sont couplés ensemble par engagement positif.

4. Unité de stator selon l'une des revendications 1 à 3, **caractérisée en ce que** l'élément de retour magnétique (16) et les unités de fer doux (17, 18) sont couplés ensemble par friction.

5. Unité de stator selon la revendication 4, **caractérisée en ce que** le couplage par friction est réalisé par un assemblage fretté.

6. Unité de stator selon l'une des revendications 1 à 5, **caractérisée en ce que** chaque unité en fer doux (17, 18) comprend une pluralité d'éléments en tôle qui sont disposés, vus en coupe axiale dans la position de montage, en empilement les uns derrière les autres de façon à former un paquet de tôles.

7. Unité de stator selon la revendication 6, **caractérisée en ce que** :
chaque paquet de tôles a une forme annulaire ;
chaque paquet de tôles possède un corps orienté dans le sens de la circonférence avec des saillies (28.1.1-28.1.n ; 28.2.1-28.2.n) formées par des évidements ouverts sur le bord (22.1.1-22.1.n ; 22.2.1-22.2.n) au niveau de la surface de circonférence (21.1, 21.2) orientée vers le rotor (6) dans la position de montage ;
les évidements ouverts sur le bord (22.1.1-22.1.n ; 22.2.1-22.2.n) et les saillies (28.1.1-28.1.n ; 28.2.1-28.2.n) sont disposés, vus dans le sens de la circonférence, à certains intervalles réguliers.

8. Unité de stator selon l'une des revendications 1 à 7, **caractérisée en ce que** l'élément de retour magnétique (16) est construit en plusieurs parties.

9. Unité de stator selon l'une des revendications 1 à 8, **caractérisée en ce que** l'unité de stator (4) est un élément du stator interne d'un moteur électrique (1).

10. Unité de stator selon l'une des revendications 1 à 9, **caractérisée en ce que** l'unité de stator (4) est un élément du stator externe d'un moteur électrique (1).

11. Unité de stator (2) selon l'une des revendications 1 à 10, **caractérisée en ce qu'**elle comporte les éléments suivants :
un boîtier de stator (5) ;
l'unité de stator (4) peut être reliée au boîtier de stator (5) au niveau de l'élément de retour magnétique (16).

12. Unité de stator selon la revendication 11, **caractérisée en ce que** :
le boîtier de stator (5) comprend au moins une partie de boîtier (47) orientée dans le sens de la circonférence et renfermant le rotor (6) ou le stator externe (50), pouvant être couplée avec une partie latérale (46) du côté de la face d'extrémité qui s'étend dans le sens radial.

13. Unité de stator selon la revendication 12, **caractérisée en ce que** la partie annulaire du boîtier de stator (47) et la partie de boîtier disposée sur la face d'extrémité (46) forment un ensemble constructif.

14. Unité de stator selon l'une des revendications 1 à 9 et 11 à 13, **caractérisée en ce que** :
l'unité de stator (4) est réalisée comme un élément du stator interne ;
le stator externe associé au rotor (6) en formant un entrefer (55) dans le sens radial comprend, dans le sens de la circonférence, plusieurs éléments pleins disposés à intervalles définis les uns par rapport aux autres et ayant une section en forme de U, avec des éléments en forme de dents (51) qui sont associés au rotor (6) de manière complémentaire comme les unités de stator (4) ;
les éléments (51) sont faits de matériaux produits par métallurgie des poudres et compressés et sont reliés au moyen d'éléments de fixation (56.1-56.n ; 57.1-57.n) au boîtier du stator (5).

15. Unité de stator selon la revendication 14, **caractérisée en ce que** l'assemblage entre les éléments (51) du stator externe et le boîtier du stator (5) est réalisé par des vissages.

16. Unité de stator selon l'une des revendications 1 à 15, **caractérisée en ce que** chaque phase ou structure polaire (8.1, 8.2) du rotor (6) est associée à des unités de stator (4) de conformation identique.

17. Unité de stator selon l'une des revendications 1 à 16, **caractérisée en ce que** les unités de fer doux (17, 18) sont partagées dans le sens de la circonférence.
